# EUROPEAN PATENT APPLICATION

(11) **EP 4 572 349 A1**
(43) Date of publication of application: **18.06.2025**
(21) Application number: 23902462.3
(22) Date of filing: 24.11.2023
(51) Int. Cl.: H04W 4/80

(54) **VEHICLE UNLOCKING METHOD AND APPARATUS, COMPUTER DEVICE, AND STORAGE MEDIUM**

(30) Priority: 12.12.2022 CN 202211590279
(71) Applicant: Nio Smart Technology Co., Ltd., Shanghai 201800 (CN)
(72) Inventor: LIU, Xing, Shanghai 201800 (CN)
(74) Representative: Torggler & Hofmann Patentanwälte - Innsbruck
(86) International application number: PCT/CN2023/133899
(87) International publication number: WO 2024/125263

(57) **Abstract**

Provided are a vehicle unlocking method and apparatus, a computer device, and a storage medium. The method includes: determining a plurality of vehicles to be unlocked within a first range, and establishing a connection with the plurality of vehicles to be unlocked (S202); measuring a distance from each vehicle to be unlocked (S204); determining, based on the distance from each vehicle to be unlocked, a target vehicle from the plurality of vehicles to be unlocked (S206); and selecting a digital key corresponding to the target vehicle, and unlocking the target vehicle using the digital key (S208). By means of the method, when vehicles corresponding to a plurality of NFC digital vehicle keys are identified within an identification range of a terminal device, a correct NFC digital vehicle key can be automatically selected to unlock a vehicle according to actual situations.

## Description

### Technical Field

The disclosure relates to the technical field of communication control, and in particular, to a vehicle unlocking method and apparatus, a computer device, and a storage medium.

### Background Art

With the development of intelligent vehicles, a growing number of vehicles start to support near field communication (NFC) unlocking. As a result, an increasing number of mobile terminals start to support NFC digital vehicle keys. A user can enable an NFC digital vehicle key for a corresponding vehicle in a mobile terminal. Through the NFC digital vehicle key in the mobile terminal, the user can control the vehicle.

Current terminal devices support the use of only one NFC digital vehicle key each time. When NFC digital vehicle keys for a plurality of vehicles are enabled in the terminal device and there are vehicles corresponding to a plurality of NFC digital vehicle keys near the terminal device, a correct NFC digital vehicle key cannot be automatically selected according to actual situations, and the user is required to manually select the NFC digital vehicle key.

### Summary

In view of the above technical problem, there is a need to provide a vehicle unlocking method and apparatus, a computer device, and a storage medium whereby when vehicles corresponding to a plurality of NFC digital vehicle keys are identified within an identification range of a terminal device, a correct NFC digital vehicle key can be automatically selected to unlock a vehicle according to actual situations.

According to a first aspect, the disclosure provides a vehicle unlocking method. The method includes:
determining a plurality of vehicles to be unlocked within a first range, and establishing a connection with the plurality of vehicles to be unlocked;
measuring a distance from each vehicle to be unlocked;
determining, based on the distance from each vehicle to be unlocked, a target vehicle from the plurality of vehicles to be unlocked; and
selecting a digital key corresponding to the target vehicle, and unlocking the target vehicle using the digital key.

In one embodiment, the establishing a connection with the plurality of vehicles to be unlocked includes:
exchanging an identity certificate encrypted by means of an encryption algorithm with each vehicle to be unlocked;
unlocking the identity certificate using a key corresponding to the encryption algorithm; and
establishing a near field connection with the plurality of vehicles to be unlocked in response to authentication of the identity certificate being passed.

In one embodiment, the encryption algorithm includes a key exchange algorithm, and the establishing a connection with the plurality of vehicles to be unlocked includes:
receiving a first public key, where the first public key is calculated using the key exchange algorithm and a first random number generated by the vehicle to be unlocked;
generating a second random number, calculating a second public key using the key exchange algorithm and the second random number, and sending the second public key to the vehicle to be unlocked;
receiving a vehicle certificate sent by the vehicle to be unlocked using a key, where the key is generated by the vehicle to be unlocked using the second public key and the first random number;
authenticating the vehicle certificate using a terminal public key in a terminal device, and generating the key based on the first public key and the second random number;
sending a terminal certificate encrypted using the key to the vehicle to be unlocked, to instruct the vehicle to be unlocked to authenticate the terminal certificate based on a public key in the vehicle to be unlocked; and
establishing the connection with the vehicle to be unlocked in response to authentication of both of the vehicle certificate and the terminal certificate being passed.

In one embodiment, the determining a plurality of vehicles to be unlocked within a first range includes:
obtaining broadcast information from a plurality of vehicles identified within the first range, where the broadcast information includes basic information of each vehicle; and
verifying the plurality of vehicles based on the basic information, to determine the plurality of vehicles to be unlocked from the plurality of vehicles.

In one embodiment, the determining, based on the distance from each vehicle to be unlocked, a target vehicle from the plurality of vehicles to be unlocked includes:
periodically obtaining the distance from each vehicle to be unlocked, and determining, based on the vehicle to be unlocked with the smallest distance, the target vehicle from the plurality of vehicles to be unlocked.

In one embodiment, the measuring a distance from each vehicle to be unlocked includes:
measuring, by means of ultra-wide band ranging, the distance from each vehicle to be unlocked.

In one embodiment, the measuring, by means of ultra-wide band ranging, the distance from each vehicle to be unlocked includes:
obtaining a first time at which a first pulse signal carrying a message is sent to each vehicle to be unlocked;
obtaining a second time at which a second pulse signal carrying a message is received, where the second pulse signal is sent by each vehicle to be unlocked; and
calculating the distance from each vehicle to be unlocked based on the first time and the second time.

In one embodiment, before the determining a plurality of vehicles to be unlocked within a first range, the method further includes:
encrypting a digital key signature certificate with a key and then uploading the digital key signature certificate to a server corresponding to the vehicle, to instruct the server to decrypt and authenticate the digital key signature certificate using the key;
receiving the signed digital key signature certificate in response to the decryption and authentication of the digital key signature certificate by the server being passed, where the signed digital key signature certificate is obtained by the server after signing the digital key signature certificate using a preset vehicle certificate, and the signed digital key signature certificate is bound to the corresponding vehicle; and
generating a digital key corresponding to the vehicle based on the signed digital key signature certificate.

According to a second aspect, the disclosure further provides a vehicle unlocking apparatus. The apparatus includes:
a vehicle connection module configured to determine a plurality of vehicles to be unlocked within a first range, and establish a connection with the plurality of vehicles to be unlocked;
a ranging module configured to measure a distance from each vehicle to be unlocked;
a target vehicle determination module configured to determine, based on the distance from each vehicle to be unlocked, a target vehicle from the plurality of vehicles to be unlocked; and
an unlocking module configured to select a digital key corresponding to the target vehicle, and unlock the target vehicle using the digital key.

According to a third aspect, the disclosure further provides a computer device. The computer device includes a memory and a processor, where the memory stores a computer program, and the processor, when executing the computer program, implements the steps in any one of the above method embodiments.

According to a fourth aspect, the disclosure further provides a computer-readable storage medium. The computer-readable storage medium has a computer program stored thereon, where the computer program, when executed by a processor, causes the steps in any one of the above method embodiments to be implemented.

According to a fifth aspect, the disclosure further provides a computer program product. The computer program product includes a computer program, where the computer program, when executed by a processor, causes the steps in any one of the above method embodiments to be implemented.

In the above embodiments, the plurality of vehicles to be unlocked within the first range are determined, and the connection with the plurality of vehicles to be unlocked is established, to allow for communication with the plurality of vehicles to be unlocked. Then, the distance from each vehicle to be unlocked can be measured to determine the distance between the terminal device and each vehicle to be unlocked. Generally, when the distance is relatively small, the vehicle to be unlocked may be considered as a vehicle that a user is intended to use. Therefore, the target vehicle can be determined from the plurality of vehicles to be unlocked based on the distance from each vehicle to be unlocked, and then a digital key corresponding to the target vehicle can be selected from a plurality of digital keys to unlock the target vehicle using the digital key. By means of this solution, when vehicles corresponding to a plurality of NFC digital vehicle keys are identified, a correct NFC digital vehicle key can be automatically selected according to actual situations, and the user is not required to manually select the vehicle key.

### Brief Description of the Drawings

To more clearly illustrate the technical solutions in specific implementations of the disclosure or in the prior art, the accompanying drawings for describing the specific implementations or the prior art will be briefly described below. Apparently, the accompanying drawings in the description below show some of the implementations of the disclosure, and those of ordinary skill in the art may still derive other accompanying drawings from these accompanying drawings without creative efforts.
FIG. 1 is a diagram of an application environment of a vehicle unlocking method according to an embodiment;
FIG. 2 is a schematic flowchart of a vehicle unlocking method according to an embodiment;
FIG. 3 is a schematic diagram of determination of a target vehicle according to an embodiment;
FIG. 4 is a schematic flowchart of step S202 according to an embodiment;
FIG. 5 is another schematic flowchart of step S202 according to an embodiment;
FIG. 6 is a schematic timing diagram of authenticating a terminal device and each vehicle to be unlocked using a key exchange algorithm according to an embodiment;
FIG. 7 is a schematic flowchart of step S202 according to an embodiment;
FIG. 8 is a schematic flowchart of measuring a distance by means of ultra-wide band ranging according to an embodiment;
FIG. 9 is a schematic flowchart before step S202 according to an embodiment;
FIG. 10 is a schematic flowchart of a vehicle unlocking method according to another embodiment;
FIG. 11 is a schematic block diagram of a structure of a vehicle unlocking apparatus according to an embodiment; and
FIG. 12 is a schematic diagram of an internal structure of a computer device according to an embodiment.

### Detailed Description of Embodiments

In order to make the objective, technical solutions, and advantages of the disclosure clearer, the disclosure is further described in detail below with reference to the accompanying drawings and embodiments. It should be understood that the specific embodiments described herein are merely used to explain the disclosure and are not intended to limit the disclosure.

It should be noted that the terms "first", "second", and the like in the description, claims, and accompanying drawings of the disclosure are intended to distinguish between similar objects, and are not intended to describe a particular order or sequence. It should be understood that the data termed in such a way are interchangeable as appropriate, so that the embodiments of the disclosure described herein can be implemented in other orders than the order illustrated or described herein. Furthermore, the terms "include" and "have" and any variations thereof are intended to cover non-exclusive inclusions. For example, a process, a method, an apparatus, a product, or a device that includes a series of steps or units is not necessarily limited to those steps or units that are explicitly listed, but may include other steps or units not explicitly listed or inherent to such a process, method, product or device.

The term "and/or" herein is merely a description of an association relationship between associated objects, and indicates that three relationships may exist. For example, A and/or B may indicate that only A exists, both A and B exist, and only B exists. In addition, the character "/" herein generally indicates an "or" relationship between the associated objects.

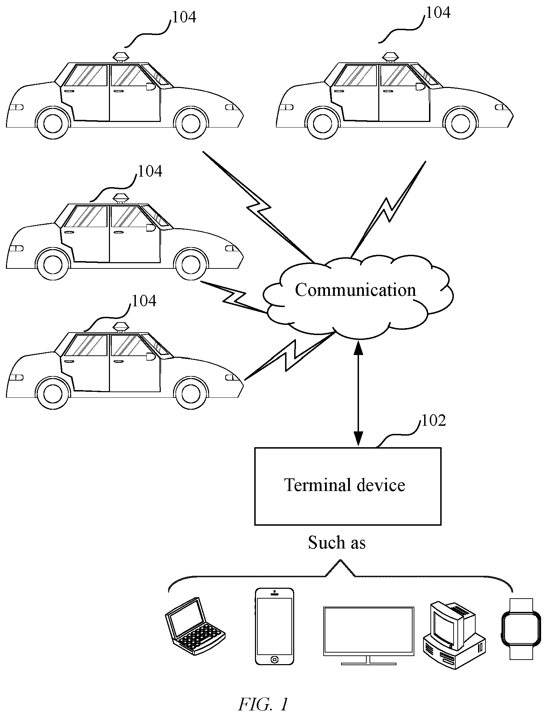

An embodiment of the disclosure provides a vehicle unlocking method that may be applied in an application environment as shown in FIG. 1. In the method, a terminal device 102 communicates with a plurality of vehicles 104 to be unlocked. The terminal device 102 determines a plurality of vehicles 104 to be unlocked within a first range, and establishes a connection with the plurality of vehicles to be unlocked. The terminal device 102 measures a distance from each vehicle to be unlocked. The terminal device 102 determines, based on the distance from each vehicle to be unlocked, a target vehicle from the plurality of vehicles 104 to be unlocked. The terminal device 102 selects a digital key corresponding to the target vehicle, and unlocks the target vehicle using the digital key. The terminal 102 may include, but is not limited to, various personal computers, notebook computers, smart phones, tablet computers, Internet of things devices, and portable wearable devices. The Internet of things device may be a smart speaker, a smart television, a smart air conditioner, a smart onboard device, or the like.

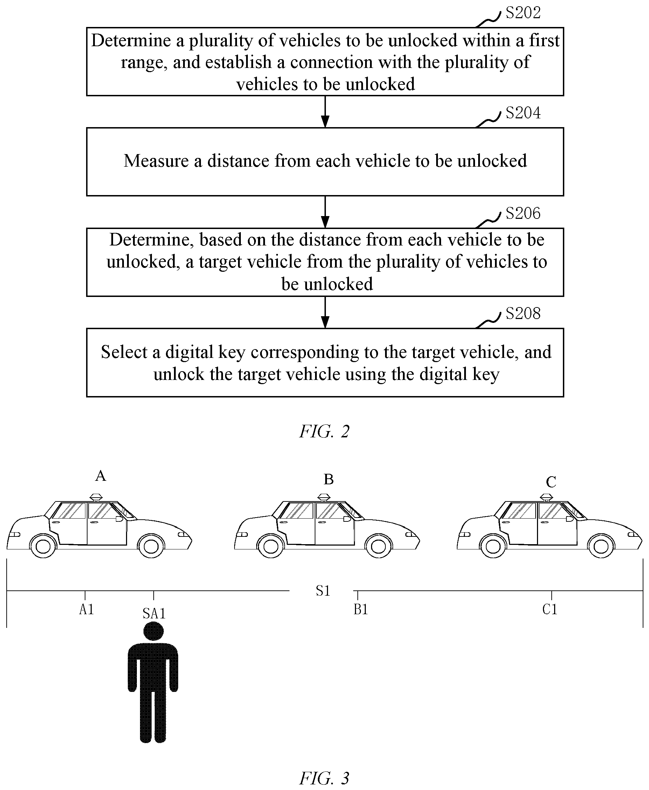

In an embodiment, as shown in FIG. 2, a vehicle unlocking method is provided. The application of the method to the terminal device 102 in FIG. 1 is taken as an example for description. The method includes the following steps.

S202: Determine a plurality of vehicles to be unlocked within a first range, and establish a connection with the plurality of vehicles to be unlocked.

The first range may generally be a range identifiable by the terminal device. For example, when the vehicle to be unlocked is identified using Bluetooth, the first range may be an identification range of the Bluetooth. Alternatively, when the vehicle to be unlocked is identified using WIFI, the first range may be an identification range of the WIFI. The vehicle to be unlocked may generally be a user's own vehicle that supports unlocking using an NFC digital key. The connection established with the vehicle to be unlocked may generally be a near field connection, such as a Bluetooth connection, a WIFI connection, or a P2P connection. The vehicle to be unlocked is generally an identity-authenticated vehicle, to ensure security after the connection.

Specifically, the terminal device identifies the plurality of vehicles to be unlocked within the first range by means of Bluetooth, WIFI, or other connections. Then, the terminal device establishes the connection with the plurality of vehicles to be unlocked by means of Bluetooth, WIFI, or other connection methods.

S204: Measure a distance from each vehicle to be unlocked.

Specifically, once the connection is established, the terminal device can communicate with each vehicle to be unlocked to transmit their respective device information. Then, the distance from each vehicle to be unlocked can be measured by means of an ultra-wide band (UWB) ranging technique, or measured by means of a time of flight (TOF) measurement method, or measured by means of, for example, a satellite positioning technology. Generally, after the connection with the plurality of vehicles to be unlocked is made, the distance from each vehicle to be unlocked is uninterruptedly measured until a vehicle is unlocked using a finally determined digital key.

S206: Determine, based on the distance from each vehicle to be unlocked, a target vehicle from the plurality of vehicles to be unlocked.

The target vehicle may generally be a vehicle that may need to be unlocked.

Specifically, a vehicle to be unlocked at a distance from the terminal device within a first preset range may be determined based on the distance from each vehicle to be unlocked that is measured in the above step, and the vehicle to be unlocked may be the target vehicle. The first preset range may generally be 1 m, 50 cm, etc., and may be set according to actual situations.

In some possible embodiments, after the uninterrupted measurement for the distance from each vehicle to be unlocked, the distance from each vehicle to be unlocked can be obtained periodically. The periodicity may be 10 seconds, 30 seconds, 1 minute, etc. Then, a vehicle to be unlocked with the smallest distance can be obtained continuously, to determine the target vehicle from the vehicles to be unlocked.

For example, as shown in FIG. 3, the vehicles to be unlocked are A, B, and C, respectively. The user is moving along a path S1 with the terminal device held in hand, while the terminal device uninterruptedly measures distances between the terminal device and the vehicles A, B, and C in real time. When the user moves to a position A1, the vehicle A at this time may be the target vehicle. When the user moves to a position B1, the vehicle B at this time may be the target vehicle. When the user moves to a position C1, the vehicle C at this time may be the target vehicle. When the user carrying the terminal device finally moves to a position SA1 and stops, the vehicle A may be determined as the final target vehicle. During movement of the user with the terminal device held in hand, the distance from the vehicle to be unlocked is generally varying, and therefore the target vehicle is also varying from moment to moment. When the user stops moving or has not moved within a first preset period of time, the target vehicle at this time can be determined.

S208: Select a digital key corresponding to the target vehicle, and unlock the target vehicle using the digital key.

The digital key may generally be an NFC digital vehicle key. Each NFC digital vehicle key in the terminal device is generally successfully authenticated with a cloud certificate and a vehicle key certificate, and is bound to a unique vehicle to be unlocked. Each of the cloud certificate authentication and the vehicle key certificate may generally be a string of identifiers or numbers that has a secure identity-authentication attribute and that is generated by means of encryption operations.

Specifically, after the target vehicle is determined in real time, the corresponding NFC digital vehicle key in the terminal device can be selected based on the determined target vehicle. Once the target vehicle varies, the corresponding digital vehicle key also varies in the terminal device. After the user selects the NFC digital vehicle key for unlocking, that is, the NFC digital vehicle key in the terminal device is determined, there is no need to measure the distance from each vehicle to be unlocked, and there is no need to determine the target vehicle.

It can be understood that the vehicle to be unlocked and the terminal device mentioned above each have corresponding hardware means to support various ranging methods or connection methods. For example, in the case of UWB ranging, the vehicle to be unlocked needs to be provided with a UWB ranging anchor, where the UWB ranging anchor may be UWB hardware at a fixed position of the vehicle. Through the UWB ranging anchor, the vehicle can complete high-accuracy measurement for the distance from the UWB-supported terminal device. The terminal device needs to support a UWB ranging technique. When unlocked using the NFC digital vehicle key, the vehicle to be unlocked needs to be provided with an NFC apparatus, and the terminal device needs to support an NFC technology.

In the above vehicle unlocking method, the plurality of vehicles to be unlocked within the first range are determined, and the connection with the plurality of vehicles to be unlocked is established, to allow for communication with the plurality of vehicles to be unlocked. Then, the distance from each vehicle to be unlocked can be measured to determine the distance between the terminal device and each vehicle to be unlocked. Generally, when the distance is relatively small, the vehicle to be unlocked may be considered as a vehicle that a user is intended to use. Therefore, the target vehicle can be determined from the plurality of vehicles to be unlocked based on the distance from each vehicle to be unlocked, and then a digital key corresponding to the target vehicle can be selected from a plurality of digital keys to unlock the target vehicle using the key. By means of this solution, when vehicles corresponding to a plurality of NFC digital vehicle keys are identified, a correct NFC digital vehicle key can be automatically selected according to actual situations, and the user is not required to manually select the vehicle key.

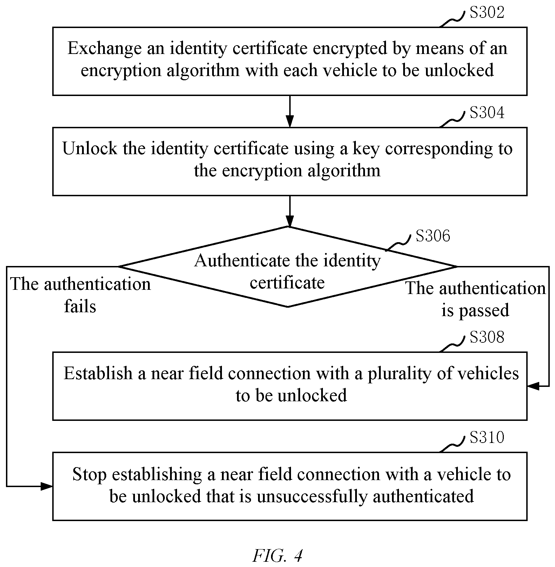

In an embodiment, as shown in FIG. 4, the establishing a connection with the plurality of vehicles to be unlocked includes the following steps.

S302: Exchange an identity certificate encrypted by means of an encryption algorithm with each vehicle to be unlocked.

S304: Unlock the identity certificate using a key corresponding to the encryption algorithm.

S306: Authenticate the identity certificate.

S308: Establish a near field connection with the plurality of the vehicles to be unlocked in response to authentication of the identity certificate being passed.

S310: Stop establishing a near field connection with the vehicle to be unlocked that is unsuccessfully authenticated in response to authentication of the identity certificate failing.

The identity certificate is generally an electronic document used for public key infrastructure, and is used to prove the identity of a public key owner. The document contains public key information, owner identity information (subject), and a digital signature of the document by a digital certificate authority (issuer), to ensure that entire content of the document is correct. The encryption algorithm may include a data encryption standard (DES) algorithm, an RSA algorithm, an elliptic curve Diffie-Hellman (ECDH) key exchange algorithm, etc. The near field connection may generally include a Bluetooth connection, a WIFI connection, a ZigBee connection, etc.

Specifically, the vehicle to be unlocked and the terminal device encrypt their respective identity certificates using an encryption key in the encryption algorithm. Then, the terminal device decrypts the identity certificate of the vehicle to be unlocked using a decryption key in the encryption algorithm, and then authenticates the decrypted identity certificate of the vehicle to be unlocked. Similarly, the vehicle to be unlocked also needs to decrypt the identity certificate of the terminal device using a decryption key in the encryption algorithm, and then authenticate the decrypted identity certificate of the terminal device. Once authentication of both of the identity certificate of the vehicle to be unlocked and the identity certificate in the terminal device is passed, the terminal device can establish the near field connection with the vehicle to be unlocked. Once the authentication of either of the identity certificate of the vehicle to be unlocked and the identity certificate in the terminal device fails, the terminal device refrains from establishing a connection with the corresponding vehicle to be unlocked that is unsuccessfully authenticated.

In this embodiment, before the connection is made, the encrypted identity certificates are exchanged by means of the encryption algorithm. Moreover, authentication is performed on both of the terminal device and the vehicle to be unlocked, and once the authentication of both of the terminal device and the vehicle to be unlocked is passed, the connection is made. This can ensure the security of the connection between the terminal device and the vehicle to be unlocked.

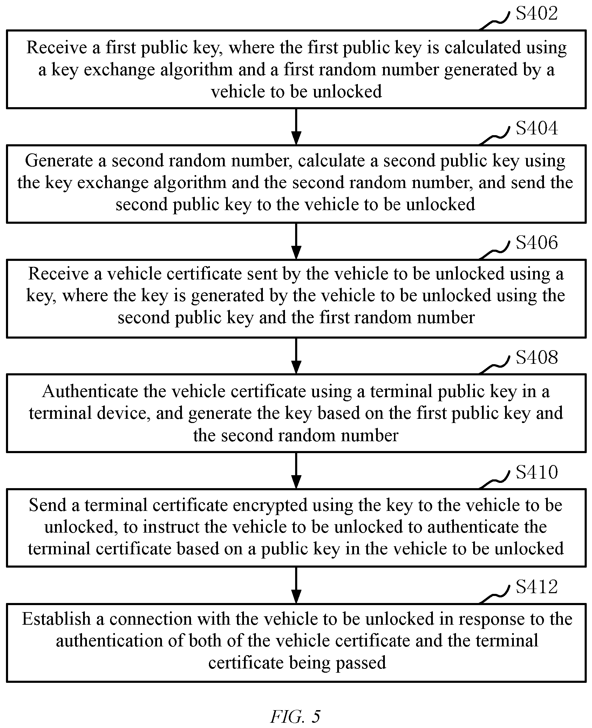

In an embodiment, as shown in FIG. 5, the encryption algorithm includes a key exchange algorithm. The establishing a connection with the plurality of vehicles to be unlocked includes the following steps.

S402: Receive a first public key, where the first public key is calculated using the key exchange algorithm and a first random number generated by the vehicle to be unlocked.

S404: Generate a second random number, calculate a second public key using the key exchange algorithm and the second random number, and send the second public key to the vehicle to be unlocked.

S406: Receive a vehicle certificate sent by the vehicle to be unlocked using a key, where the key is generated by the vehicle to be unlocked using the second public key and the first random number.

S408: Authenticate the vehicle certificate using a terminal public key **in** the terminal device, and generate the key based on the first public key and the second random number.

S410: Send a terminal certificate encrypted using the key to the vehicle to be unlocked, to instruct the vehicle to be unlocked to authenticate the terminal certificate based on a public key in the vehicle to be unlocked.

S412: Establish the connection with the vehicle to be unlocked in response to authentication of both of the vehicle certificate and the terminal certificate being passed.

The key exchange algorithm may generally be the ECDH algorithm. The ECDH algorithm is generally built on such a premise that given a point P on an elliptic curve and an integer (a common parameter) g, it is easy to solve Q = gP. However, it is difficult to solve g through Q and P.

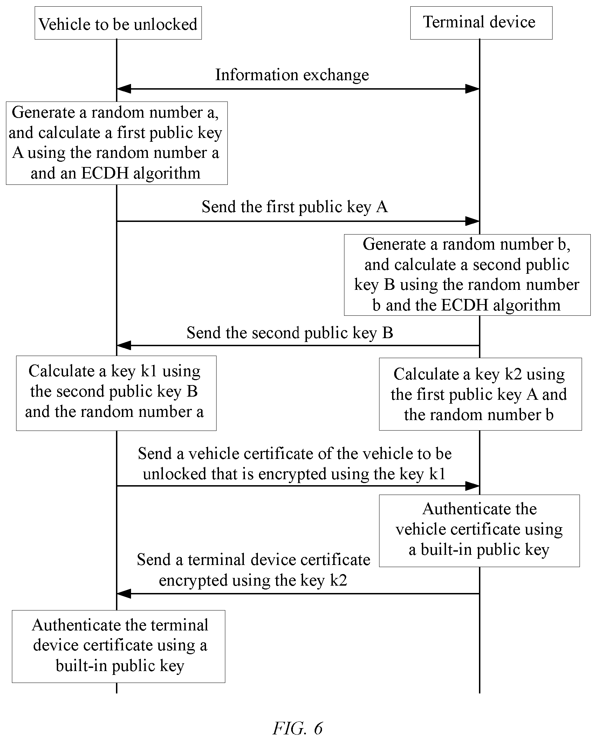

Specifically, first, before the use of the ECDH algorithm, as shown in FIG. 6, device certificates signed and issued by device manufacturers are built in the terminal device and each vehicle to be unlocked. That is, a device certificate of the terminal device that is signed and issued by a manufacturer of the terminal device is built in the vehicle to be unlocked; and a device certificate of the vehicle to be unlocked that is signed and issued by a manufacturer of the vehicle to be unlocked is built in the terminal device. Both of the terminal device and the vehicle to be unlocked contain their respective public keys. The vehicle to be unlocked performs information exchange with the terminal device. For example, the terminal device obtains type and version information of the vehicle to be unlocked. The vehicle to be unlocked obtains the type, etc. of the terminal device. The terminal device and the vehicle to be unlocked select, through negotiation, common parameters P and g of the elliptic curve. The vehicle to be unlocked generates a random number a, calculates a first public key A using the random number a and the ECDH algorithm, and sends the first public key A to the terminal device. The terminal device generates a random number b, calculates a second public key B using the random number b and the ECDH algorithm, and sends the second public key to the vehicle to be unlocked. The vehicle to be unlocked calculates a key k1 using the second public key B and the random number a. The vehicle to be unlocked sends, to the terminal device, the vehicle certificate of the vehicle to be unlocked that is encrypted using the key k1. The terminal device authenticates the vehicle certificate using a public key built in the terminal device. The terminal device calculates a key k2 using the first public key A and the random number b, and sends the terminal device certificate encrypted using the key k2 to the vehicle to be unlocked. The vehicle to be unlocked authenticates the terminal device certificate using a public key built in the vehicle to be unlocked. Once the authentication of both of the vehicle to be unlocked and the terminal device is passed, the terminal device can establish the connection with the vehicle to be unlocked. Generally, the key k1 and the key k2 are the same key.

In some exemplary embodiments, for example, the process of encrypted authentication using the ECDH algorithm is illustrated using a specific value. First, the common parameters P and g are set, where P = 83, and g = 8. The vehicle to be unlocked generates the first random number a, where a = 9. Then, the first public key A is calculated using a, where A = (g^a) mod P = (8^9) mod 83 = 5. The terminal device generates the second random number b, where b = 21, and then calculates the second public key B using b, where B = (g^b) mod P = (8^21) mod 83 = 18. The vehicle to be unlocked calculates the key k1 using the second public key B and the random number a, where k1 = (((g^b) mod P)^a) mod P = (18^9) mod 83 = 24. The terminal device calculates the key k2 using the first public key A and the random number b, where k2 = (((g^a) mod P)^b) mod P = (5^21) mod 83 = 24. The key k1 is equal to the key k2. The terminal device and the vehicle to be unlocked can use this value to derive, from an AES algorithm, key materials used for encrypting their messages. It can be understood that a shared secret protocol is generated above using the value 24, and as a small value, an encrypted message generated by the value can easily be corrupted by a brute-force attack. However, in practical situations, P, g, a, and b may generally be very large numbers, and a corresponding shared secret protocol needs to be generated by a computer or server.

In this embodiment, the security between the terminal device and the vehicle to be unlocked is verified by means of the ECDH algorithm, which can ensure the security of a message channel. After authentication of the certificates is passed, it can be determined that the connection between the terminal device and the vehicle to be unlocked is trusted.

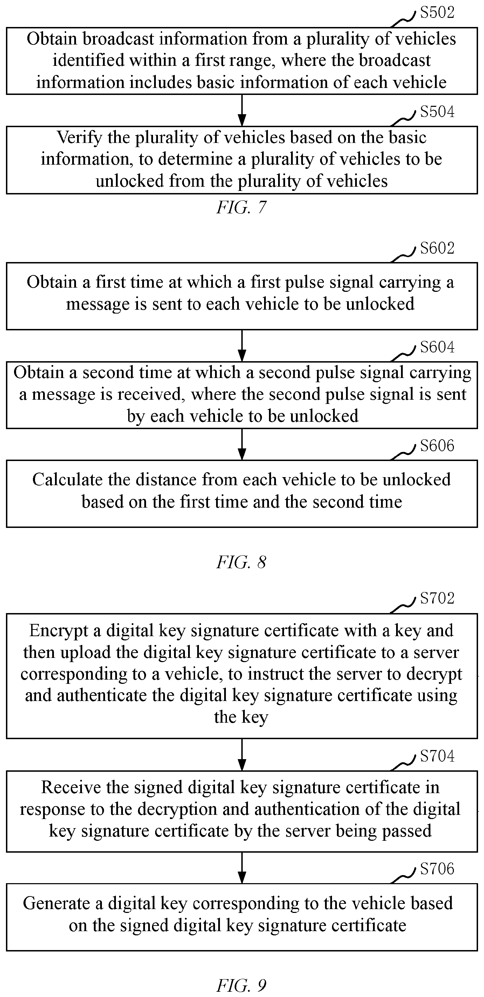

In an embodiment, as shown in FIG. 7, the determining a plurality of vehicles to be unlocked within a first range includes the following steps.

S502: Obtain broadcast information from a plurality of vehicles identified within the first range, where the broadcast information includes basic information of each vehicle.

S504: Verify the plurality of vehicles based on the basic information, to determine the plurality of vehicles to be unlocked from the plurality of vehicles.

The broadcast information may generally be information sent by the vehicle. When identifying the information, the terminal device can make a connection with the vehicle. Generally, the broadcast information is a Bluetooth broadcast. The basic information may generally be the type, version number, name, etc. of the vehicle.

Specifically, the terminal device may use Bluetooth to scan for Bluetooth broadcasts from the plurality of vehicles identified within an identification range of the Bluetooth. The basic information of each vehicle is carried in the Bluetooth broadcast. The plurality of vehicles are preliminarily verified based on the basic information, to determine the plurality of vehicles to be unlocked from the plurality of vehicles.

In some exemplary embodiments, for example, the plurality of vehicles are vehicles X1, X2, and X3. After identifying Bluetooth broadcasts from the vehicles X1, X2, and X3, the terminal device obtains basic information in the corresponding Bluetooth broadcasts. A description is made using the vehicle name as the basic information. Generally, the terminal device may have established a connection with the vehicle to be unlocked. Therefore, the terminal device generally has stored therein, for example, a vehicle name corresponding to the vehicle to be unlocked. Accordingly, if the vehicle name stored in the terminal device is the same as the vehicle name carried in the Bluetooth broadcast, it can be determined that the terminal device can unlock the vehicle. Therefore, the vehicle may be the vehicle to be unlocked. It can be understood that the above description is merely for an illustrative purpose. In practical situations, those skilled in the art can determine the vehicle to be unlocked based on various types of basic information according to different demands. If the vehicle name stored in the terminal device is not the same as the vehicle name carried in the Bluetooth broadcast, it can be determined that the vehicle may not be a vehicle owned by the user of the terminal device, and the vehicle cannot be unlocked by a key in the terminal device. Therefore, the vehicle is not the vehicle to be unlocked.

In this embodiment, the vehicle to be unlocked that meets a requirement can be found by means of the basic information, which prevents other vehicles from affecting a vehicle unlocking process.

In an embodiment, the measuring a distance from each vehicle to be unlocked includes:
measuring, by means of ultra-wide band ranging, the distance from each vehicle to be unlocked.

The ultra-wide band ranging may generally be double-sided two-way ranging (DS-TWR) in UWB ranging.

Furthermore, as shown in FIG. 8, the measuring, by means of ultra-wide band ranging, the distance from each vehicle to be unlocked includes the following steps.

S602: Obtain a first time at which a first pulse signal carrying a message is sent to each vehicle to be unlocked.

S604: Obtain a second time at which a second pulse signal carrying a message is received, where the second pulse signal is sent by each vehicle to be unlocked.

S606: Calculate the distance from each vehicle to be unlocked based on the first time and the second time.

The pulse signals are signals continuously sent at a certain voltage amplitude and a certain time interval. The message carried by the first pulse signal is different from the message carried by the second pulse signal.

Specifically, the terminal device and each vehicle to be unlocked send pulse signals carrying messages to each other. The terminal device sends the first pulse signal carrying the message to each vehicle to be unlocked. The time at which the terminal device sends the first pulse signal carrying the message to each vehicle to be unlocked is recorded as the first time. After receiving the first pulse signal, the vehicle to be unlocked sends the second pulse signal carrying the message to the terminal device. After the terminal device obtains the second pulse signal, the time at which the terminal device obtains the second pulse signal is recorded as the second time. Then, a total time of flight of the first pulse signal and the second pulse signal is obtained based on the first time and the second time. Based on the time of flight and a transmission speed of the pulse signals, the distance between the terminal device and each vehicle to be unlocked can be determined, typically with an accuracy of 10 cm.

It can be understood that the messages carried in the first pulse signal and the second pulse signal are merely used for distinguishing. In some embodiments of the disclosure, there are no limitations on the type, category, and information of the carried messages, provided that the pulse signals can be distinguished and it can be determined that the pulse signal is either the first pulse signal or the second pulse signal.

In this embodiment, when there are a plurality of vehicles to be unlocked, the distance between the terminal device and each vehicle to be unlocked can be accurately and correctly calculated by means of the double-sided two-way ranging, which allows for accurate determination of the target vehicle.

Before the target vehicle is unlocked using the NFC digital vehicle key, the NFC digital vehicle key needs to be generated or enabled in the terminal device. In an embodiment, as shown in FIG. 9, before the determining a plurality of vehicles to be unlocked within a first range, the method further includes the following steps.

S702: Encrypt a digital key signature certificate with a key and then upload the digital key signature certificate to a server corresponding to the vehicle, to instruct the server to decrypt and authenticate the digital key signature certificate using the key.

S704: Receive the signed digital key signature certificate in response to the decryption and authentication of the digital key signature certificate by the server being passed, where the signed digital key signature certificate is obtained by the server after signing the digital key signature certificate using a preset vehicle certificate, and the signed digital key signature certificate is bound to the corresponding vehicle.

S706: Generate a digital key corresponding to the vehicle based on the signed digital key signature certificate.

The digital key signature certificate may generally be an NFC digital key certificate. The vehicle certificate may be a unique certificate bound to the vehicle. Signing is generally a mathematical operation mode for two certificates. A signed NFC digital key certificate is bound to a unique vehicle, and has permission to control the unique vehicle. Generally, the NFC digital vehicle key is unsigned. In the unsigned state, the NFC digital key certificate is not bound to any vehicle and has no permission to control any vehicle.

Specifically, login to a user account bound to a vehicle may first be performed in the terminal device, where the account may be bound to a plurality of vehicles. The server at the backend of the vehicle verifies a password of the account for login in the terminal device. After the verification is passed, the terminal device encrypts the NFC digital key certificate using the key, and then uploads the NFC digital key certificate to the server. The server decrypts the NFC digital key certificate using the key. After the decryption, corresponding information in the NFC digital key certificate is obtained and then authenticated. The authentication manner may involve determining whether the information meets a requirement, whether content in the information is the content of the corresponding NFC digital key certificate obtained, whether the format of the information is correct, etc. The specific authentication manner is not limited in some embodiments of the disclosure. After the authentication by the server is passed, the server signs the NFC digital key certificate using the preset vehicle certificate. Then, the server encrypts the signed NFC digital key certificate using the key, and sends same to the terminal device. The terminal device receives the encrypted signed NFC digital key certificate, and decrypts same using the key. Then, the corresponding NFC digital vehicle key is generated based on the signed NFC digital key certificate obtained after the decryption. It can be understood that the vehicle mentioned in the above embodiment may generally be the vehicle to be unlocked.

In this embodiment, before the target vehicle is unlocked using the NFC digital vehicle key, the authentication of the NFC digital key certificate is required, and the NFC digital vehicle key cannot be generated until the authentication is passed. This ensures the security of the NFC digital vehicle key.

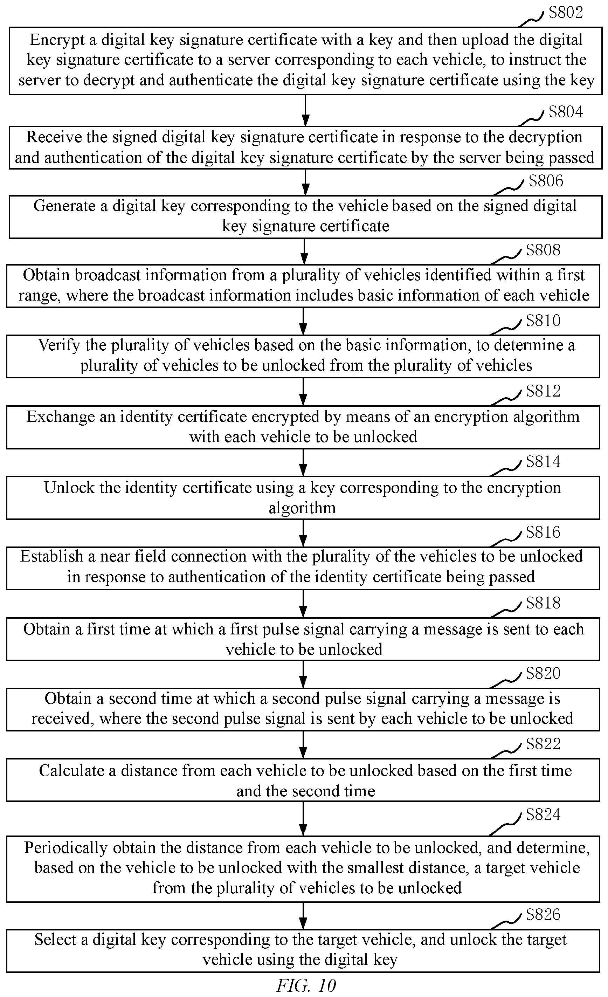

In an embodiment, as shown in FIG. 10, an embodiment of the disclosure further provides another vehicle unlocking method. The method includes the following steps.

S802: Encrypt a digital key signature certificate with a key and then upload the digital key signature certificate to a server corresponding to each vehicle, to instruct the server to decrypt and authenticate the digital key signature certificate using the key.

S804: Receive the signed digital key signature certificate in response to the decryption and authentication of the digital key signature certificate by the server being passed, where the signed digital key signature certificate is obtained by the server after signing the digital key signature certificate using a preset vehicle certificate, and the signed digital key signature certificate is bound to the corresponding vehicle.

S806: Generate a digital key corresponding to the vehicle based on the signed digital key signature certificate.

S808: Obtain broadcast information from a plurality of vehicles identified within the first range, where the broadcast information includes basic information of each vehicle.

S810: Verify the plurality of vehicles based on the basic information, to determine the plurality of vehicles to be unlocked from the plurality of vehicles.

S812: Exchange an identity certificate encrypted by means of an encryption algorithm with each vehicle to be unlocked.

S814: Unlock the identity certificate using a key corresponding to the encryption algorithm.

S816: Establish a near field connection with the plurality of the vehicles to be unlocked in response to authentication of the identity certificate being passed.

S818: Obtain a first time at which a first pulse signal carrying a message is sent to each vehicle to be unlocked.

S820: Obtain a second time at which a second pulse signal carrying a message is received, where the second pulse signal is sent by each vehicle to be unlocked.

S822: Calculate a distance from each vehicle to be unlocked based on the first time and the second time.

S824: Periodically obtain the distance from each vehicle to be unlocked, and determine, based on the vehicle to be unlocked with the smallest distance, a target vehicle from the plurality of vehicles to be unlocked.

S826: Select a digital key corresponding to the target vehicle, and unlock the target vehicle using the digital key.

For specific implementations and definitions in this embodiment, reference may be made to the above embodiment, and details are not repeated herein.

It should be understood that although the steps in the flowcharts involved in the above embodiments are shown in sequence as indicated by the arrows, these steps are not necessarily executed in the order indicated by the arrows. Unless explicitly stated herein, there is no strict order restriction on the execution of these steps, and these steps can be executed in other orders. Moreover, at least some of the steps in the flowcharts involved in the above embodiments may include a plurality of steps or stages. These steps or stages are not necessarily executed at the same time, but may be executed at different times. The execution order of these steps or stages is not necessarily sequential, but they may be performed in turn or alternately with other steps or at least some of the steps or stages in other steps.

Based on the same inventive concept, an embodiment of the disclosure further provides a vehicle unlocking apparatus for implementing the vehicle unlocking method mentioned above. The solution provided by this apparatus to solve the problem is similar to that described in the above method. Therefore, for specific definitions in one or more vehicle unlocking apparatus embodiments provided below, reference may be made to the above definitions of the vehicle unlocking method, and details are not repeated herein.

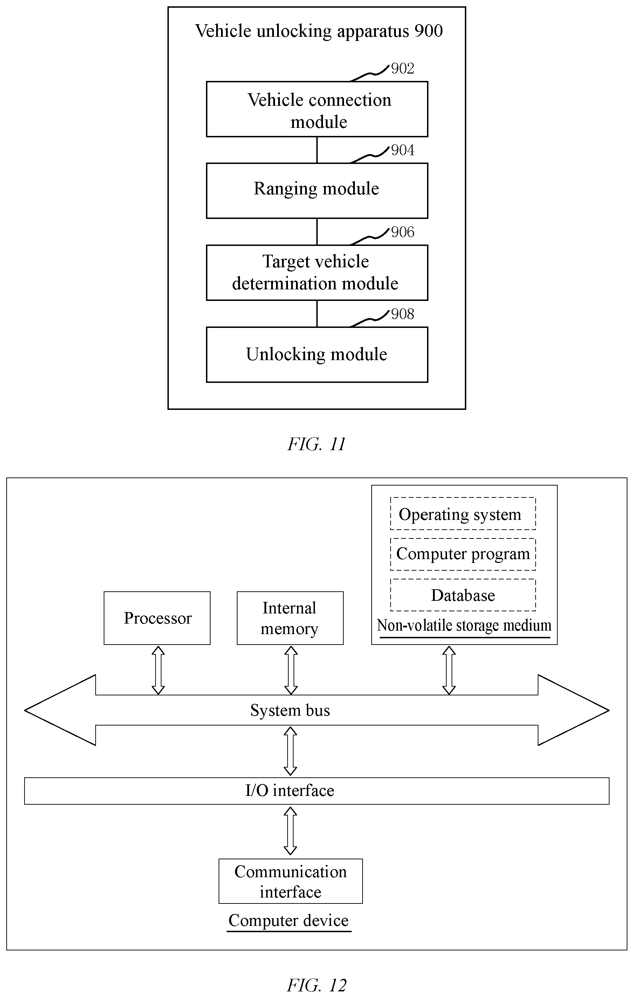

In an embodiment, as shown in FIG. 11, a vehicle unlocking apparatus 900 is provided. The apparatus includes: a vehicle connection module 902, a ranging module 904, a target vehicle determination module 906, and an unlocking module 908.

The vehicle connection module 902 is configured to determine a plurality of vehicles to be unlocked within a first range, and establish a connection with the plurality of vehicles to be unlocked.

The ranging module 904 is configured to measure a distance from each vehicle to be unlocked.

The target vehicle determination module 906 is configured to determine, based on the distance from each vehicle to be unlocked, a target vehicle from the plurality of vehicles to be unlocked.

The unlocking module 908 is configured to select a digital key corresponding to the target vehicle, and unlock the target vehicle using the digital key.

In an embodiment of the apparatus, the vehicle connection module 902 includes: a certificate exchange module configured to exchange an identity certificate encrypted by means of an encryption algorithm with each vehicle to be unlocked;
a certificate decryption module configured to unlock the identity certificate using a key corresponding to the encryption algorithm; and
a first connection sub-module configured to establish a near field connection with the plurality of the vehicles to be unlocked in response to authentication of the identity certificate being passed.

In an embodiment of the apparatus, the encryption algorithm includes a key exchange algorithm. The vehicle connection module includes: a key exchange algorithm processing module configured to: receive a first public key, where the first public key is calculated using the key exchange algorithm and a first random number generated by the vehicle to be unlocked; generate a second random number, calculate a second public key using the key exchange algorithm and the second random number, and send the second public key to the vehicle to be unlocked; receive a vehicle certificate sent by the vehicle to be unlocked using a key, where the key is generated by the vehicle to be unlocked using the second public key and the first random number; authenticate the vehicle certificate using a terminal public key in a terminal device, and generate the key based on the first public key and the second random number; and send a terminal certificate encrypted using the key to the vehicle to be unlocked, to instruct the vehicle to be unlocked to authenticate the terminal certificate based on a public key in the vehicle to be unlocked; and
a second connection sub-module configured to establish the connection with the vehicle to be unlocked in response to authentication of both of the vehicle certificate and the terminal certificate being passed.

In an embodiment of the apparatus, the vehicle connection module 902 further includes: a broadcast information obtaining module configured to obtain broadcast information from a plurality of vehicles identified within the first range, where the broadcast information includes basic information of each vehicle; and
a verification module configured to verify the plurality of vehicles based on the basic information, to determine the plurality of vehicles to be unlocked from the plurality of vehicles.

In an embodiment of the apparatus, the target vehicle determination module 906 is further configured to periodically obtain the distance from each vehicle to be unlocked, and determine, based on the vehicle to be unlocked with the smallest distance, the target vehicle from the plurality of vehicles to be unlocked.

In an embodiment of the apparatus, the ranging module 904 is further configured to measure, by means of ultra-wide band ranging, the distance from each vehicle to be unlocked.

In an embodiment of the apparatus, the ranging module 904 includes: a first time obtaining module configured to obtain a first time at which a first pulse signal carrying a message is sent to each vehicle to be unlocked;
a second time obtaining module configured to obtain a second time at which a second pulse signal carrying a message is received, where the second pulse signal is sent by each vehicle to be unlocked; and
a distance calculation module configured to calculate the distance from each vehicle to be unlocked based on the first time and the second time.

In an embodiment of the apparatus, the apparatus further includes a digital key generation module configured to: encrypt a digital key signature certificate with a key and then upload the digital key signature certificate to a server corresponding to the vehicle, to instruct the server to decrypt and authenticate the digital key signature certificate using the key; receive the signed digital key signature certificate in response to the decryption and authentication of the digital key signature certificate by the server being passed, where the signed digital key signature certificate is obtained by the server after signing the digital key signature certificate using a preset vehicle certificate, and the signed digital key signature certificate is bound to the corresponding vehicle; and generate a digital key corresponding to the vehicle based on the signed digital key signature certificate.

All or some of the modules in the above vehicle unlocking apparatus may be implemented in software, hardware or a combination thereof. The modules described above may be embedded in or independent of a processor of a computer device in the form of hardware, or may be stored in a memory of the computer device in the form of software, so that the processor can call and execute the operations corresponding to the modules described above.

In an embodiment, a computer device is provided. The computer device may be a server, and a diagram of an internal structure of the computer device may be as shown in FIG. 12. The computer device includes a processor, a memory, and a network interface that are connected through a system bus. The processor of the computer device is configured to provide computing and control capabilities. The memory of the computer device includes a non-volatile storage medium and an internal memory. The non-volatile storage medium stores an operating system, a computer program, and a database. The internal memory provides an environment for the operation of the operating system and the computer program in the non-volatile storage medium. The database of the computer device is used to store a digital key. The network interface of the computer device is configured to communicate with an external terminal through a network connection. The computer program, when executed by the processor, causes the vehicle unlocking method to be implemented.

Those skilled in the art can understand that the structure shown in FIG. 12 is only a block diagram of a partial structure related to the solution of the disclosure, and does not constitute a limitation on the computer device to which the solution of the disclosure is applied. A specific computer device may include more or fewer components than shown, or have some components combined, or have a different arrangement of components.

In an embodiment, a computer device is provided, including a memory and a processor, where the memory has a computer program stored therein, and the processor, when executing the computer program, implements the steps in any one of the above method embodiments.

In an embodiment, a computer-readable storage medium is provided, which has a computer program stored thereon, where the computer program, when executed by a processor, causes the steps in any one of the above method embodiments to be implemented.

In an embodiment, a computer program product is provided, including a computer program, where the computer program, when executed by a processor, causes the steps in any one of the above method embodiments to be implemented.

Those of ordinary skill in the art may understand that implementation of all or some of the procedures of the embodiment method described above could be accomplished by a computer program instructing relevant hardware. The computer program may be stored in a non-volatile computer-readable storage medium. When the computer program is executed, the procedures of the above method embodiments may be executed. Any reference to the memory, the database, or other media used in the embodiments provided in the disclosure may include at least one of non-volatile and volatile memories. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM), an external cache memory, etc. As an illustration and not a limitation, RAM may be in various forms, such as a static random access memory (SRAM) or a dynamic random access memory (DRAM). The database involved in the embodiments provided in the disclosure may include at least one of a relational database and a non-relational database. The non-relational database may include a blockchain-based distributed database, etc., but is not limited thereto. The processor involved in the embodiments provided in the disclosure may be a general-purpose processor, a central processing unit, a graphics processor, a digital signal processor, a programmable logic device, a quantum computing-based data processing logic device, etc., but is not limited thereto.

The technical features of the above embodiments may be combined in any manner, and in order to simplify the description, not all possible combinations of the technical features of the above embodiments are described. However, as long as there is no conflict between the combinations of these technical features, they should be considered to be within the scope of the description in the disclosure.

The embodiments described above merely illustrate several implementations of the disclosure and are described relatively specifically and in detail, but should not be construed as limiting the patent scope of the disclosure. It should be noted that several variations and improvements may also be made by those of ordinary skill in the art without departing from the concept of the disclosure, and should fall within the scope of protection of the disclosure. Therefore, the scope of protection of the disclosure shall be subject to the appended claims.

## Claims

1. A vehicle unlocking method, **characterized in that** the method comprises:
determining a plurality of vehicles to be unlocked within a first range, and establishing a connection with the plurality of vehicles to be unlocked;
measuring a distance from each vehicle to be unlocked;
determining, based on the distance from each vehicle to be unlocked, a target vehicle from the plurality of vehicles to be unlocked; and
selecting a digital key corresponding to the target vehicle, and unlocking the target vehicle using the digital key.

2. The method according to claim 1, **characterized in that** the establishing a connection with the plurality of vehicles to be unlocked comprises:
exchanging an identity certificate encrypted by means of an encryption algorithm with each vehicle to be unlocked;
unlocking the identity certificate using a key corresponding to the encryption algorithm; and
establishing a near field connection with the plurality of vehicles to be unlocked in response to authentication of the identity certificate being passed.

3. The method according to claim 2, **characterized in that** the encryption algorithm comprises a key exchange algorithm, and the establishing a connection with the plurality of vehicles to be unlocked comprises:
receiving a first public key, wherein the first public key is calculated using the key exchange algorithm and a first random number generated by the vehicle to be unlocked;
generating a second random number, calculating a second public key using the key exchange algorithm and the second random number, and sending the second public key to the vehicle to be unlocked;
receiving a vehicle certificate sent by the vehicle to be unlocked using a key, wherein the key is generated by the vehicle to be unlocked using the second public key and the first random number;
authenticating the vehicle certificate using a terminal public key in a terminal device, and generating the key based on the first public key and the second random number;
sending a terminal certificate encrypted using the key to the vehicle to be unlocked, to instruct the vehicle to be unlocked to authenticate the terminal certificate based on a public key in the vehicle to be unlocked; and
establishing the connection with the vehicle to be unlocked in response to authentication of both of the vehicle certificate and the terminal certificate being passed.

4. The method according to any one of claims 1 to 3, **characterized in that** the determining a plurality of vehicles to be unlocked within a first range comprises:
obtaining broadcast information from a plurality of vehicles identified within the first range, wherein the broadcast information comprising basic information of each vehicle; and
verifying the plurality of vehicles based on the basic information, to determine the plurality of vehicles to be unlocked from the plurality of vehicles.

5. The method according to any one of claims 1 to 4, **characterized in that** the determining, based on the distance from each vehicle to be unlocked, a target vehicle from the plurality of vehicles to be unlocked comprises:
periodically obtaining the distance from each vehicle to be unlocked, and determining, based on the vehicle to be unlocked with the smallest distance, the target vehicle from the plurality of vehicles to be unlocked.

6. The method according to any one of claims 1 to 5, **characterized in that** the measuring a distance from each vehicle to be unlocked comprises:
measuring, by means of ultra-wide band ranging, the distance from each vehicle to be unlocked.

7. A vehicle unlocking apparatus, **characterized in that** the apparatus comprises:
a vehicle connection module configured to determine a plurality of vehicles to be unlocked within a first range, and establish a connection with the plurality of vehicles to be unlocked;
a ranging module configured to measure a distance from each vehicle to be unlocked;
a target vehicle determination module configured to determine, based on the distance from each vehicle to be unlocked, a target vehicle from the plurality of vehicles to be unlocked; and
an unlocking module configured to select a digital key corresponding to the target vehicle, and unlock the target vehicle using the digital key.

8. A computer device, comprising a memory and a processor, wherein the memory stores a computer program, and **characterized in that** the processor, when executing the computer program, implements the steps of the method according to any one of claims 1 to 6.

9. A computer-readable storage medium having a computer program stored thereon, **characterized in that** the computer program, when executed by a processor, causes the steps of the method according to any one of claims 1 to 6 to be implemented.

10. A computer program product, comprising a computer program, **characterized in that** the computer program, when executed by a processor, causes the steps of the method according to any one of claims 1 to 6 to be implemented.
